# EUROPÄISCHE PATENTSCHRIFT

(11) **EP 3 712 459 B1**
(45) Veröffentlichungstag und Bekanntmachung des Hinweises auf die Patenterteilung: **23.06.2021**
(21) Anmeldenummer: 20155955.6
(22) Anmeldetag: 06.02.2020
(51) Int. Cl.: F16D 65/12

(54) **BREMSSCHEIBE**
BRAKE DISC
DISQUE DE FREIN

(30) Priorität: 08.02.2019 DE 102019103125
(43) Veröffentlichungstag der Anmeldung: 23.09.2020
(73) Patentinhaber: SHW Brake Systems GmbH, 78532 Tuttlingen (DE)
(72) Erfinder: Keller, Torben, 78532 Tuttlingen (DE); Schmitz, Johann, 78532 Tuttlingen (DE)
(74) Vertreter: Schmid, Wolfgang

(56) Entgegenhaltungen:
- DE-A1- 19 918 667
- DE-A1-102006 043 945
- DE-A1-102011 003 097

## Beschreibung

Die Erfindung betrifft eine Bremsscheibe mit einem Bremsscheibentopf, mit einem zwei Reibringscheiben aufweisenden Reibring und mit mehreren stiftförmigen Verbindungselementen zur Verbindung des Bremsscheibentopfs mit dem Reibring nach der im Oberbegriff von Anspruch 1 näher definierten Art.

Eine gattungsgemäße Bremsscheibe ist aus der DE 10 2011 003 097 A1 bekannt.

Eine ähnliche Bremsscheibe ist aus der DE 10 2016 122 321 A1 bekannt. Dieses Dokument beschreibt unter anderem auch eine Vielzahl von Ausführungsformen eines zur Verbindung eines Bremsscheibentopfs mit einem Reibring dienenden Verbindungselements.

Die DE 10 2010 024 389 A beschreibt eine Verbindungseinrichtung zwischen einem Reibring und einem Bremsscheibentopf einer Bremsscheibe, wobei der Reibring über mehrere Verbindungselemente mit dem Bremsscheibentopf verbunden ist. Dabei ragen die über den Umfang des Bremsscheibentopfs verteilt angeordneten und mit demselben verbundenen Verbindungselemente in Aussparungen in eine radial innenliegende Umfangswand des Reibrings hinein. Die Bohrungen im Reibring und die Verbindungselemente sind konisch ausgeführt.

Die DE 10 2006 043 945 A1 beschreibt eine belüftete Bremsscheibe mit einem Reibring und einem Bremsscheibentopf, welcher mittels mehrerer um den Umfang desselben angeordneter, in radialer Richtung verlaufender Verbindungselemente mit dem Reibring verbunden ist. Die Mittelachsen der Verbindungselemente sind gegenüber der Mitte des Reibrings in Axialrichtung desselben versetzt.

Aus der DE 10 2008 044 339 B4 ist eine Bremsscheibenanordnung für Scheibenbremsen mit einem Reibring, einem Anbindungsadapter zur Anbindung der Bremsscheibenanordnung an eine Radnabe und mehreren Verbindungselementen zur Verbindung des Reibrings mit dem Anbindungsadapter bekannt. Der Anbindungsadapter weist einen Befestigungsbereich auf, in dem das Verbindungselement ortsfest befestigt ist und der als ein sich vom Außenumfang des Anbindungsadapters in radialer Richtung in diesen hinein erstreckender Rücksprung ausgebildet ist. Des Weiteren weist der Anbindungsadapter eine radiale Ausnehmung zur Zirkulation von Luft auf, die sich vom Innenumfang des Anbindungsadapters zu dessen Befestigungsbereich für das Verbindungselement erstreckt. Der Reibring weist einen Aufnahmebereich auf, in dem das Verbindungselement derart aufgenommen ist, dass der Reibring in Relation zu dem Verbindungselement radial beweglich ist.

In der DE 10 2013 215 997 A1 ist eine Bremsscheibe für eine Scheibenbremse mit einem Bremsscheibentopf und einem mit diesem über Verbindungsmittel verbundenen Reibring beschrieben. Ein Mantel des Bremsscheibentopfs ist mit Abschnitten mit reduzierter Wandstärke und/oder Durchbrüchen versehen, die als am Außenumfang des Bremsscheibentopfmantels befindliche, axial gerichtete Materialaussparungen ausgebildet sind, die zur Platzierung der Verbindungsmittel möglichst nahe am Bremsscheibentopfmantel dienen.

Eine weitere Bremsscheibe ist in der DE 10 2009 021 852 A1 beschrieben. Diese weist einen Bremsscheibentopf und einen Reibring auf, die über stiftförmige Verbindungselemente miteinander verbunden sind. Die Verbindungselemente sind unter Aufweitung einer axial verlaufenden Durchtrittsöffnung des Bremsscheibentopfes in diese eingesetzt.

Aus der DE 10 2009 002 690 A1 ist eine weitere Bremsscheibe mit zwei Reibringen und einem über Verbindungselemente mit den Reibringen verbundenen Scheibentopf bekannt. Zwischen den beiden Reibringen ist ein Trägersteg ausgebildet, in dem sich Ausnehmungen befinden.

Des Weiteren ist in der DE 10 2013 002 300 B3 ein Verbindungselement beschrieben, das an beiden Endbereichen, d. h. an dem in dem Bremsscheibentopf aufgenommenen Endbereich und an dem in dem Reibring aufgenommenen Endbereich, Ausnehmungen und/oder Vorsprünge aufweisen. Auf diese Weise können die Verbindungselemente formschlüssig mit dem Bremsscheibentopf bzw. dem Reibring vergossen werden.

Die DE 101 03 639 A1 beschreibt als Hohlstifte ausgebildete Verbindungselemente, die eine verbesserte Kühlung des Reibrings ermöglichen sollen.

Eine Bremsscheibe mit einem Reibring und einem Bremsscheibentopf, die mittels derartiger Verbindungselemente verbunden sind, ist außerdem in der DE 198 43 399 A1 beschrieben. Dabei ist eine Wand des Bremsscheibentopfs in Radialrichtung nachgiebig ausgeführt.

Weitere Verbindungselemente, welche integral und einteilig mit dem Reibring hergestellt und an ihrer in dem Reibring aufgenommenen Seite keilförmig ausgeführt sind, sind in der EP 2 275 702 B1 beschrieben.

Die EP 1 122 456 A1 beschreibt Verbindungselemente, die an ihrem in dem Reibring fest eingegossenen Endbereich mit mehreren ringförmig umlaufenden Nuten versehen sind.

Die GB 1 032 923 beschreibt eine Bremsscheibe, deren Reibring an die Führungsflächen eines Nabenkörpers derart angegossen ist, dass bei einem Temperaturanstieg und einer damit verbundenen Vergrößerung des Reibrings eine radiale Bewegung desselben relativ zu dem Bremsscheibentopf möglich ist.

Aus der DE 199 18 667 A1 ist eine Bremsscheibe für eine Scheibenbremse eines Fahrzeugs, mit einem Topfabschnitt sowie einem Reibringabschnitt mit zwei Reibringen, die über Stege miteinander verbunden sind, bekannt. Dabei greifen Topf- und Reibringabschnitt so ineinander, dass in axialer Richtung und in Umfangsrichtung ein Formschluss und in radialer Richtung eine begrenzte Verschiebbarkeit gegeben ist.

In der US 5,862,892 A ist ein Verbundrotor für Scheibenbremsen beschrieben, der einen äußeren Reibungsabschnitt mit zwei Ringabschnitten, ein inneres Nabenteil mit einem zentralen Montageabschnitt, und einen Umfangsabschnitt aufweist, der in einen Hohlraum des äußeren Reibungsabschnitt eingegossen ist.

Sämtlichen der bekannten innenbelüfteten Bremsscheiben ist gemeinsam, dass eine zur Kühlung des Reibrings notwendige, von der Fahrzeuginnenseite zur Öffnung des Bremsscheibentopfes und damit in den Kühlkanal der Bremsscheibe geleitete Luftströmung, nur im begrenzten Maße durch den Kühlkanal des Reibrings geführt werden kann. Grund hierfür ist zum einen der vergleichsweise große Schlitz zwischen dem Bremsscheibentopf und dem Reibring, der es ermöglicht, dass ein Teil der die Bremsscheibe von innen nach außen durchströmenden Luft zu diesem Schlitz ausströmt und somit nicht durch den Kühlkanal des Reibrings strömen kann. Zum anderen befinden sich in dem Verbindungsbereich zwischen dem Bremsscheibentopf und dem Reibring verschiedene die Strömung behindernde Elemente bzw. Bereiche, die insbesondere aufgrund der Anbindung des Reibrings an den Bremsscheibentopf über die Verbindungselemente erforderlich sind. Die stiftförmigen Verbindungselemente erfordern, bedingt durch den großen Durchmesser derselben, wie in der DE 10 2008 044 339 B4, oder einen Schulterbereich mit großem Durchmesser, wie in der DE 10 2016 122 321 A1, dabei einen besonders großen Platzbedarf, der nicht nur zu einer Behinderung des Kühlluftstroms führt, sondern auch die Gestaltungsmöglichkeiten der zur Aufnahme der stiftförmigen Verbindungselemente dienenden Aufnahmebereichen einschränkt. Des Weiteren tragen die Verbindungselemente auch nicht unwesentlich zur Masse der gesamten Bremsscheibe bei.

Es ist daher Aufgabe der vorliegenden Erfindung, eine Bremsscheibe mit einem Bremsscheibentopf, einem zwei Reibringscheiben und einen zwischen denselben gebildeten Kühlkanal aufweisenden Reibring und mit mehreren stiftförmigen Verbindungselementen zur Verbindung des Bremsscheibentopfs mit dem Reibring zu schaffen, die eine bessere Durchströmung der Bremsscheibe und insbesondere des Reibrings mit Kühlluft ermöglicht.

Erfindungsgemäß wird diese Aufgabe durch die in Anspruch 1 genannten Merkmale gelöst.

Ein sich durch das Einsetzen zumindest eines in Umfangsrichtung in sich geschlossenen Abschnittes einer Mantelfläche des Innendurchmessers des Reibrings als Teil einer Gießform beim Gießen des Bremsscheibentopfs und der während der Erstarrung einsetzenden Schrumpfung des Materials des Bremsscheibentopfs, ergebender Spalt zwischen dem Bremsscheibentopf und dem Reibring weist mit einer Breite von 0,1 - 1,5 mm eine weitaus geringere Breite auf als dies bei üblichen Verbundbremsscheiben der Fall ist. Dadurch kann sehr viel weniger Kühlluft durch diesen Spalt entweichen, was zu einem erhöhten Kühlluftstrom durch den Kühlkanal des Reibrings und damit zu einer besseren Kühlung desselben führt. Letztendlich ergeben sich auf diese Weise geringere Temperaturen des Reibrings, wodurch die erfindungsgemäße Bremsscheibe eine wesentlich bessere Bremsleistung zu erbringen vermag.

Durch den kleineren Spalt zwischen dem Außendurchmesser des Bremsscheibentopfs und dem Innendurchmesser des Reibrings ergibt sich eine Verkürzung der freien Länge der stiftförmigen Verbindungselemente bzw. Stifte und damit eine signifikante Reduzierung der auf die Verbindungselemente wirkenden Spannungen. Die erfindungsgemäße Lösung erlaubt des Weiteren eine Verringerung der Größe der Stifte, nämlich auf einen Durchmesser von 3 - 6,5 mm, woraus sich die Möglichkeit ergibt, den Aufnahmebereich des Reibrings für die Stifte wesentlich kleiner zu gestalten und somit den Kühlkanal für eine bessere Durchströmung mit Kühlluft aufzuweiten.

Außerdem ermöglicht die erfindungsgemäße Lösung, durch die sich ergebende bessere Kühlung, eine Reduktion der thermischen Masse der Bremsscheibe, was die Verringerung der gesamten Masse der Bremsscheibe ermöglicht. Ein grundsätzlicher Vorteil einer solchen Verbundbremsscheibe, die stiftförmige Verbindungselemente zur Verbindung des Bremsscheibentopfs mit dem Reibring aufweist, besteht darin, dass durch den Entfall von Materialdopplung am Reibring Gewicht eingespart wird. Ein weiterer Vorteil der erfindungsgemäßen Lösung besteht darin, dass der Innendurchmesser des Reibrings verkleinert und/oder der Außendurchmesser des Bremsscheibentopfs vergrößert werden können, was zu einem verbesserten Gestaltungsspielraum bei der Auslegung einer solchen Bremsscheibe führt.

Erfindungsgemäß ist ferner vorgesehen, dass eine axiale Ausdehnung desjenigen Teils der Aufnahmebereiche des Reibrings, der sich von der Kühlkanalfläche in Richtung des Kühlkanals erstreckt 4 - 7,5 mm, vorzugsweise 5,5 mm, beträgt. Durch diese in axialer Richtung sehr geringe Ausdehnung der Aufnahmebereiche ergibt sich eine vergrößerte Öffnung in den Kühlkanal, sodass mehr Kühlluft in denselben einströmen kann und die Kühlung der erfindungsgemäßen Bremsscheibe noch weiter verbessert wird.

Die Verbindungselemente können im Wesentlichen zylindrisch ohne nach außen abstehende Absätze, oder konisch ausgebildet sein und einen Konuswinkel von 0,6° - 3,6°, vorzugsweise 1,6° - 2,6°, aufweisen. Die Verwendung konischer Verbindungselemente mit dem genannten Konuswinkel führt zu geringeren Reibkräften zwischen den Verbindungselementen und dem Reibring, was zu einem guten Gleiten der Verbindungselemente innerhalb des Reibrings und damit zur Reduzierung der thermomechanischen Spannungen in diesem Bereich führt.

Eine für die Praxis besonders relevante Ausführungsform der Erfindung kann darin bestehen, dass der Spalt eine Breite von0,57 - 1,0 mm, vorzugsweise 0,7 mm, aufweist. Derartige Spaltbreiten lassen sich insbesondere durch die Verwendung zumindest eines Abschnitts der Innendurchmesserfläche des Reibrings als Teil einer Gießform beim Gießen des Bremsscheibentopfs erreichen. Aufgrund der genannten geringen Spaltbreiten ergibt sich eine erhebliche Reduzierung des Verlustes von Kühlluft durch den Spalt, wodurch die Kühlluftströmung durch den Kühlkanal des Reibringes deutlich erhöht und somit die Kühlung desselben verbessert wird.

In einer weiteren vorteilhaften Ausgestaltung der Erfindung kann vorgesehen sein, dass 21 - 42, vorzugsweise 27 - 32, Verbindungselemente zur Verbindung des Bremsscheibentopfs mit dem Reibring vorgesehen sind.

Durch eine derart hohe Anzahl an vorzugsweise stiftförmigen Verbindungselementen, die den Bremsscheibentopf mit dem Reibring verbinden, können zum Erreichen derselben Festigkeit der Verbindung zwischen dem Bremsscheibentopf und dem Reibring wesentlich kleinere Verbindungselemente eingesetzt werden als dies bei üblichen Bremsscheiben der Fall ist. Dies ermöglicht auch eine erhebliche Verkleinerung der die Verbindungselemente aufnehmenden Bereiche in dem Reibring und insbesondere in dem Bremsscheibentopf, wodurch es möglich ist, sowohl den Reibring, insbesondere jedoch auch den Bremsscheibentopf, in dem zu durchströmenden Bereich schlanker bzw. schmaler als bislang auszuführen. Dadurch wird die Luftströmung in diesem Bereich deutlich weniger behindert, was eine bessere Durchströmung dieses Bereichs und damit einen höheren Volumenstrom durch den Reibring und eine bessere Kühlung desselben sicherstellt. Durch die Materialverringerung des Bremsscheibentopfs und des Reibrings in dem genannten Bereich ergeben sich außerdem Materialeinsparungen, die zu einer Gewichts- und Kostenreduzierung der gesamten Bremsscheibe beitragen.

Eine weitere vorteilhafte Ausgestaltung der Erfindung kann darin bestehen, dass die Verbindungselemente einen Durchmesser von 4 - 5,5 mm, vorzugsweise 5 mm, aufweisen. In Abhängigkeit von der Anzahl der Verbindungselemente lässt sich, wie oben kurz angeführt, der Durchmesser derselben wesentlich verringern, ohne dass sich ein Verlust an Festigkeit ergibt, was zu den oben genannten Vorteilen im Hinblick auf eine Verkleinerung des Bremsscheibentopfs und der Aufnahmebereiche des Reibrings für die Verbindungselemente führt.

Durch die mögliche Verkleinerung der Verbindungselemente und des entsprechend verkleinerten Aufnahmebereichs des Reibrings für die Verbindungselemente ergibt sich außerdem eine geringere Einleitung von Spannungen aufgrund geringerer Steifigkeitssprünge, was zu einer Erhöhung der Festigkeit, der Lebensdauer und der Sicherheit der gesamten Bremsscheibe führt. Durch die genannte Verkleinerung des Aufnahmebereichs und die damit einhergehende geringere Materialanhäufung kann außerdem eine bessere Gießbarkeit des Bremsscheibentopfs und des Reibrings erreicht werden. Des Weiteren wird aufgrund des verkleinerten Aufnahmebereichs des Reibrings für die Verbindungselemente eine homogenere Massenverteilung erreicht, die zu kleineren Temperaturgradienten und damit zu geringeren thermomechanischen Spannungen und geringerer thermischer Ermüdung sowie geringerer Rissbildung führt, was ebenfalls die Festigkeit, die Lebensdauer und damit die Sicherheit der Bremsscheibe erhöht. Außerdem kann durch die homogenere Massenverteilung ein verbessertes Rubbel- und damit auch Komfortverhalten erreicht werden.

Wenn in einer weiteren vorteilhaften Ausgestaltung der Erfindung die Verbindungselemente jeweils eine Länge von 20 - 30 mm, vorzugsweise 22 - 26 mm aufweisen, so können die Aufnahmebereiche für die Verbindungselemente sowohl in dem Reibring als auch in dem Bremsscheibentopf verkleinert werden, wodurch sich eine weitere Verbesserung der Durchströmung des Reibrings erreichen lässt.

Des Weiteren kann vorgesehen sein, dass die Verbindungselemente konisch ausgebildet sind und einen Konuswinkel von 0,6° - 3,6°, vorzugsweise 1,6° - 2,6°, aufweisen. Die Verwendung konischer Verbindungselemente mit dem genannten Konuswinkel führt zu geringeren Reibkräften zwischen den Verbindungselementen und dem Reibring, was zu einem guten Gleiten der Verbindungselemente innerhalb des Reibrings und damit zur Reduzierung der thermomechanischen Spannungen in diesem Bereich führt.

Nachfolgend sind Ausführungsbeispiele der Erfindung anhand der Zeichnung prinzipmäßig dargestellt.

Es zeigt:
- Fig. 1: eine Schnittdarstellung einer ersten Ausführungsform einer erfindungsgemäßen Bremsscheibe;
- Fig. 2: eine vergrößerte Darstellung nach der Linie II aus Fig. 1;
- Fig. 3: eine Schnittdarstellung einer aus dem Stand der Technik bekannten Bremsscheibe;
- Fig. 4: die erfindungsgemäße Bremsscheibe in einer Fig. 3 entsprechenden Ansicht;
- Fig. 5: eine Schnittdarstellung eines Werkzeugs zur Herstellung der erfindungsgemäßen Bremsscheibe;
- Fig. 6: eine weitere Ansicht des Werkzeugs zur Herstellung der erfindungsgemäßen Bremsscheibe;
- Fig. 7: eine teilweise geschnittene Vorderansicht der Bremsscheibe gemäß der Figuren 1, 2 und 4;
- Fig. 8: eine Schnittdarstellung einer zweiten Ausführungsform einer erfindungsgemäßen Bremsscheibe;
- Fig. 9: eine vergrößerte Darstellung nach der Linie IX aus Fig. 8;
- Fig. 10: eine teilweise geschnittene perspektivische Ansicht der erfindungsgemäßen Bremsscheibe;
- Fig. 11: eine teilweise geschnittene Vorderansicht der Bremsscheibe gemäß Fig. 10; und
- Fig. 12: ein Teilstück der Abwicklung des Innendurchmessers des Reibrings einer erfindungsgemäßen Bremsscheibe mit Darstellung der axialen Ausdehnung "X" des Aufnahmebereichs des Reibrings für die Verbindungselemente.

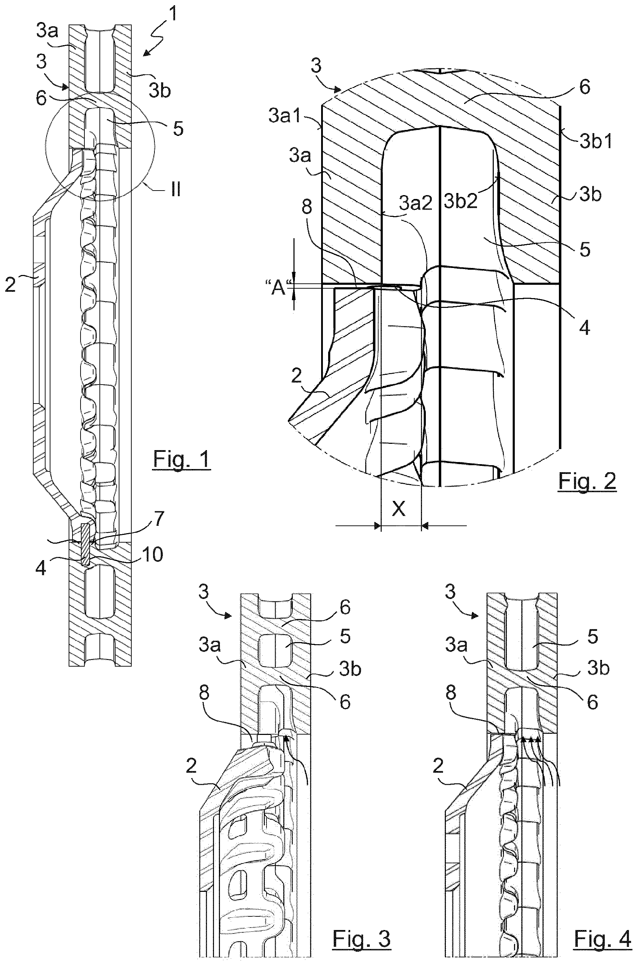

Fig. 1 zeigt eine innenbelüftete, als Verbundbremsscheibe ausgebildete und wie nachfolgend beschrieben kühlungsoptimierte Bremsscheibe 1, die in an sich bekannter Weise einen zentralen Bremsscheibentopf 2 aufweist, um dessen Umfang ein Reibring 3 angeordnet ist. Der Reibring 3 weist zwei Reibringscheiben 3a und 3b auf und ist mittels mehrerer sich in radialer Richtung von dem Bremsscheibentopf 2 zu dem Reibring 3 erstreckender stiftförmiger Verbindungselemente 4 mit dem Bremsscheibentopf 2 verbunden. Der Reibring 3 ist dabei gleitend auf den stiftförmigen Verbindungselemente 4 gelagert, wodurch er sich während einer thermischen Belastung der Bremsscheibe 1 ungehindert und frei radial ausdehnen kann und dadurch weniger anfällig bezüglich Rissbildung ist.

An ihren äußeren Planflächen weisen die Reibringscheiben 3a und 3b jeweilige, der Übersichtlichkeit halber lediglich in Fig. 2 bezeichnete Reibflächen 3a1 und 3b1 auf. Zwischen den Reibringscheiben 3a und 3b ist ein Kühlkanal 5 gebildet, durch den während des Betriebs der Bremsscheibe 1 in an sich bekannter Weise Kühlluft aus Richtung des Bremsscheibentopfs 2 durch den Reibring 3 nach außen strömen kann. An ihren inneren Planflächen weisen die Reibringscheiben 3a und 3b jeweilige Kühlkanalflächen 3a2 und 3b2 auf, die ebenfalls lediglich in Fig. 2 bezeichnet sind. Die Kühlkanalflächen 3a2 und 3b2 liegen somit den Reibflächen 3a1 und 3b1 gegenüber. Innerhalb des Kühlkanals 5 befinden sich mehrere Verbindungsstege 6, mit denen die Reibringscheiben 3a und 3b in an sich bekannter Weise miteinander verbunden sind. Des Weiteren weist der Reibring 3 mehrere Aufnahmebereiche 7 zur Aufnahme der stiftförmigen Verbindungselemente 4 auf. Diese werden zu einem späteren Zeitpunkt noch näher beschrieben.

Der Bremsscheibentopf 2 bildet in an sich bekannter Weise die Verbindung der Bremsscheibe 1 zu einem nicht dargestellten Fahrwerk eines mit der Bremsscheibe 1 ausgestatteten Kraftfahrzeugs. Des Weiteren greifen auf ebenfalls an sich bekannte Weise jeweilige, in den Figuren ebenfalls nicht dargestellte Bremsbeläge an dem Reibring 3 an, um eine gewünschte Verzögerung des Kraftfahrzeugs zu erreichen. Dabei übertragen die Verbindungselemente 4 das auf den Reibring 3 wirkende Bremsmoment auf den Bremsscheibentopf 2 und somit auf das Kraftfahrzeug. Die Verbindungselemente 4 sind somit sehr hohen Belastungen ausgesetzt und es ist essentiell für die Wirkung der Bremsscheibe, dass die Verbindungselemente 4 intakt bleiben.

Eines der Verbindungselemente 4 ist in Fig. 1 im Schnitt dargestellt. Es ist zu erkennen, dass das bei der Ausführungsform der Figuren 1 - 7 der Bremsscheibe 1 zur Verbindung des Bremsscheibentopfs 2 mit dem Reibring 3 eingesetzte Verbindungselement 4 im Wesentlichen zylindrisch ausgeführt ist. Dadurch ist es möglich, Normteile oder nur geringfügig von Normteilen abgewandelte Bauteile, wie zum Beispiel Zylinderstifte, als die Verbindungselemente 4 einzusetzen. Bei der Ausführungsform der Bremsscheibe 1 gemäß der Figuren 1 - 7 weisen die Verbindungselemente 4 einen Durchmesser von 3 - 6,5 mm, vorzugsweise 4 - 5,5 mm, noch bevorzugter 5 mm, auf. Die Länge der Verbindungselemente 4 beträgt bei der in den Figuren 1 - 7 dargestellten Ausführungsform der Bremsscheibe 1 20 - 30 mm, vorzugsweise 22 - 26 mm. Der Durchmesser und die Länge der Verbindungselemente 4 können in einem bestimmten Verhältnis zueinander stehen, grundsätzlich sind jedoch sowohl der Durchmesser als auch die Länge in den genannten Bereichen frei wählbar.

Zwischen dem Bremsscheibentopf 2 und dem Reibring 3 ist ein Spalt 8 vorhanden, der bei üblichen Bremsscheiben, wie beispielsweise bei der in der DE 10 2016 122 321 A1 beschriebenen Bremsscheibe, vergleichsweise groß ist. In Fig. 2 der DE 10 2016 122 321 A1 ist die Größe dieses Spalts zwischen dem Bremsscheibentopf und dem Reibring zu erkennen. Durch einen derart großen Spalt, wie er bei sämtlichen bekannten Verbundbremsscheiben üblich ist, kann sehr viel der an sich für die Kühlung des wie oben beschrieben von Luft durchströmbaren Reibrings 3 notwendigen Kühlluft abströmen, was zu einer zu starken Erwärmung des Reibrings 3 führen kann.

Demgegenüber weist der Spalt 8 zwischen dem Bremsscheibentopf 2 und dem Reibring 3 bei der erfindungsgemäßen Bremsscheibe 1 eine in Fig. 2 mit "A" bezeichnete Breite von 0,1 - 1,5 mm, vorzugsweise 0,5 - 1,0 mm, noch bevorzugter 0,7 mm, d.h. eine wesentlich geringere Breite als üblich auf. Dadurch kann weniger Luft durch den Spalt 8 abströmen und es gelangt mehr Luft in den zwischen den Reibringscheiben 3a und 3b des Reibrings 3 vorhandenen Kühlkanal 5, sodass der Reibring 3 besser gekühlt wird.

Aus einem Vergleich der Figuren 3 und 4 ist dieser Unterschied zwischen der in Fig. 3 dargestellten Bremsscheibe gemäß der DE 10 2016 122 321 A1 und der erfindungsgemäßen Bremsscheibe 1 deutlich erkennbar. Während durch den sehr großen Spalt 8 der aus dem Stand der Technik bekannten Bremsscheibe gemäß Fig. 3 sehr viel Kühlluft abströmen kann, wird dies bei der erfindungsgemäßen Bremsscheibe 1 durch den sehr kleinen Spalt 8 verhindert. Die Kühlluftströmung ist in den Figuren 3 und 4 mittels Pfeilen dargestellt. Die größere Anzahl an Pfeilen in Fig. 4 stellt dar, dass durch den Kühlkanal 5 zwischen den Reibringscheiben 3a und 3b des Reibrings 3 der erfindungsgemäßen Bremsscheibe 1 sehr viel mehr Kühlluft strömen kann als durch den Kühlkanal 5 zwischen den Reibringscheiben des Reibrings der Bremsscheibe gemäß der DE 10 2016 122 321 A1. Dadurch ergibt sich eine wesentlich bessere Kühlung des Reibrings 3 der erfindungsgemäßen Bremsscheibe 1.

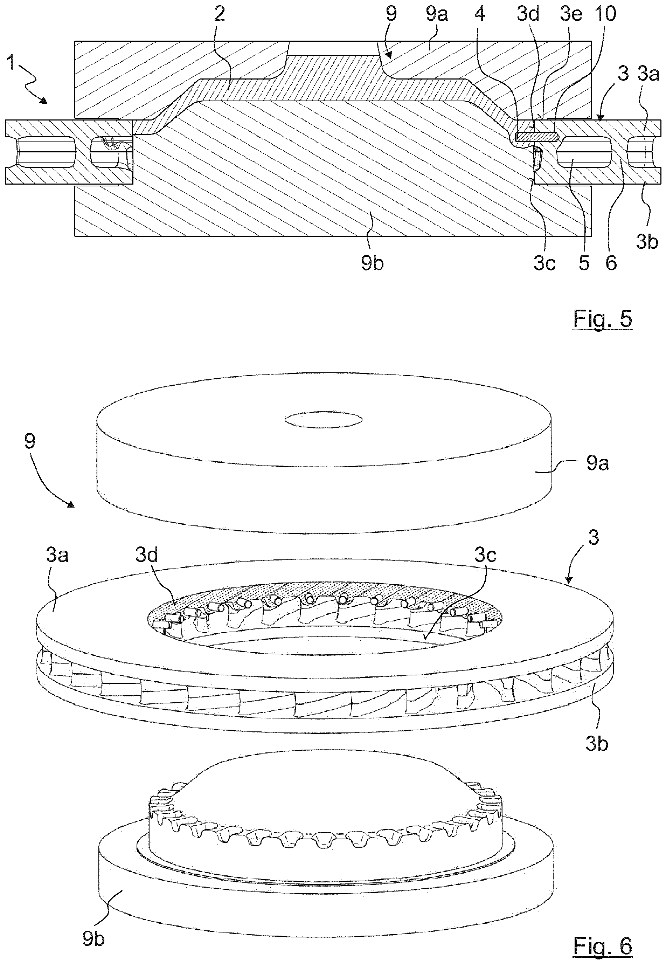

Die Breite A des Spalts 8 ergibt sich dadurch, dass beim Gießen des Bremsscheibentopfs 2 zumindest ein in Umfangsrichtung in sich geschlossener Abschnitt 3d einer Mantelfläche 3c des Innendurchmessers des Reibrings 3 als Teil einer zum Gießen des Bremsscheibentopfs 2 verwendeten Gießform 9 eingesetzt wird. Die Gießform 9, die durch ein Gießformoberteil 9a, ein Gießformunterteil 9b und den Reibring 3 gebildet wird, ist in den Figuren 5 und 6 dargestellt. Dabei schließt das Gießformoberteil 9a durch Anliegen auf einer ebenen Fläche bzw. Planfläche 3e des Reibringes 3, im vorliegenden Fall der in der Darstellung oberen Reibringscheibe 3a, den mit Schmelze zu füllenden Hohlraum der Gießform 9. Der Bremsscheibentopf 2 wird demnach in einem separaten Schritt mittels Gießen an die Verbindungselemente 4 angegossen.

Der Bremsscheibentopf 2 wird dabei mittels Kokillengießen auf an sich bekannte Art und Weise hergestellt, wobei, wie erwähnt, im Unterschied zu bekannten Lösungen der Reibring 3 bzw. ein Abschnitt 3d der Mantelfläche 3c des Innendurchmessers des Reibrings 3, als Teil der Gießform 9 verwendet wird. Beim Gießvorgang entsteht der Spalt 8 durch die, während der Erstarrung einsetzende, Schrumpfung des zum Gießen des Bremsscheibentopfs 2 eingesetzten Materials, vorzugsweise eines Aluminiumwerkstoffs.

Fig. 6 zeigt eine perspektivische Darstellung der Gießform 9. Dabei ist deutlich zu erkennen, was mit dem in Umfangsrichtung in sich geschlossenen, einen Teil der Gießform 9 bildenden Abschnitt 3d der Mantelfläche 3c des Innendurchmessers des Reibrings 3 gemeint ist, nämlich dass dieser nur einen Teil der axialen Ausdehnung der Mantelfläche 3c des Innendurchmessers des Reibrings 3 einnimmt. In Fig. 6, in der der Reibring 3 liegend dargestellt ist, entspricht dies einem Teil der Höhe der Mantelfläche 3c des Innendurchmessers des Reibrings 3. Der Abschnitt 3d ist in Fig. 6 durch eine Punktschraffierung kenntlich gemacht und es ist zu erkennen, dass im vorliegenden Fall lediglich die obere Reibringscheibe 3a den Teil der Gießform bildet. Beispielsweise kann der Abschnitt 3d der Mantelfläche 3c des Innendurchmessers des Reibrings 3 eine axiale Ausdehnung von 3 - 20 mm, vorzugsweise 5,5 - 10 mm, aufweisen.

Bei einem Verfahren zur Herstellung der Bremsscheibe 1 wird demnach beim Gießen des Bremsscheibentopfs 3 zumindest ein Abschnitt 3d der Mantelfläche 3c des Innendurchmessers des Reibrings 3 als Teil der Gießform 9 verwendet. Des Weiteren kann bei diesem Verfahren vorgesehen sein, dass der vorzugsweise aus Grauguss bestehende Reibring 3 vor dem Gießen aufgeheizt wird. Durch das Aufheizen dehnt sich der Reibring 3 aus, was dadurch, dass sich der Reibring 3 beim späteren Abkühlen wieder zusammenzieht, zu einer weiteren Verkleinerung des Spalts 8 führt.

Zur Aufnahme der Verbindungselemente 4 weist der Reibring 3 die jeweiligen, bereits oben angeführten Aufnahmebereiche 7 auf, die jeweils mit Bohrungen 10 versehen sind, in welche die Verbindungselemente 4 vor dem Gießen des Bremsscheibentopfs 2 eingesteckt werden. Die Bohrungen 10 können als Sacklochbohrungen ausgeführt sein, d. h. sie können so ausgeführt sein, dass sie sich nicht in einen der Kühlkanäle des Reibrings 3 öffnen. Eine solche Lösung, durch die ein Eintreten von Wasser in die Bohrungen 10 und die sich daraus ergebenden Korrosionsprobleme vermieden werden, kann unabhängig von den anderen hierin beschriebenen Ausführungsformen der Bremsscheibe 1 sein.

In die als Sacklochbohrungen ausgeführten Bohrungen 10 können die Verbindungselemente 4 beispielsweise befestigt werden, indem sie vor dem Montieren abgekühlt werden. Grundsätzlich ist es in diesem Fall auch möglich, an einer Seite geringfügig abgeflachte Verbindungselemente 4 zu verwenden, sodass beim Einführen der Verbindungselemente 4 in die Bohrungen 10 die Luft aus denselben entweichen kann.

Die Bereiche des Bremsscheibentopfs 2, in denen dieser an die Verbindungselemente 4 angegossen wird, werden dabei so klein wie möglich und so groß wie zum Aufnehmen der über den Reibring 3 und die Verbindungselemente 4 in den Bremsscheibentopf 2 eingeleiteten Kräfte notwendig ist ausgelegt. Durch die beschriebene Verringerung der Größe der Verbindungselemente 4 können diese Bereiche jedoch kleiner als bei bekannten Lösungen ausgeführt werden. Die oben beschriebene zylindrische Form der Verbindungselemente 4 ohne nach außen abstehende Absätze oder ähnliches ermöglicht eine weitere Verringerung der Bereiche, in denen der Bremsscheibentopf 2 um die Verbindungselemente 4 umgossen ist.

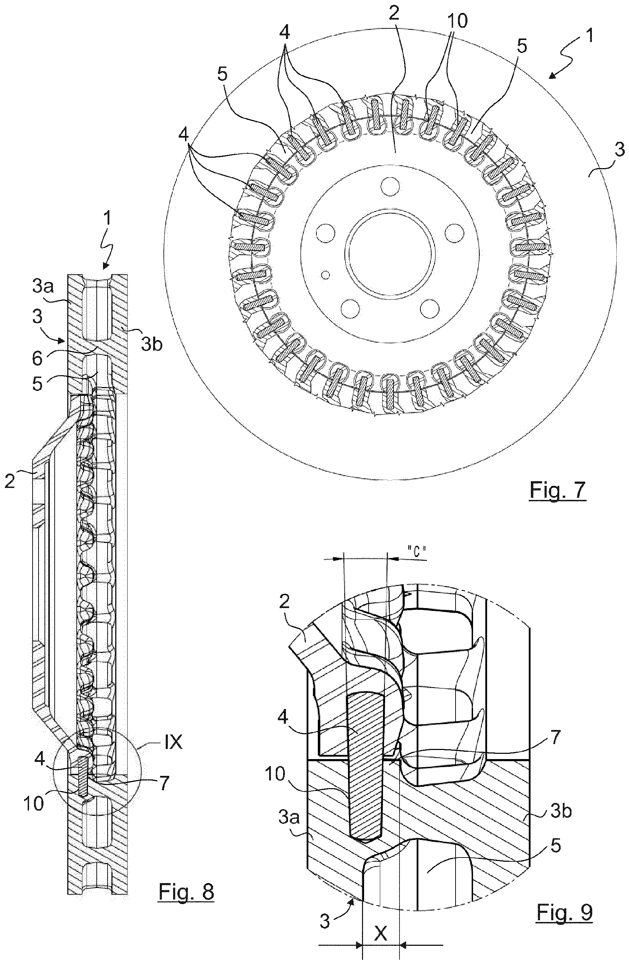

In Fig. 7 ist die Bremsscheibe 1 in einer Vorderansicht dargestellt. Dabei ist zu erkennen, dass diese eine wesentlich größere Anzahl an Verbindungselementen 4 als bekannte Bremsscheiben aufweist. Insbesondere handelt es sich um eine Anzahl von 21 - 42, vorzugsweise 27 - 32, Verbindungselementen 4. In dem konkreten Ausführungsbeispiel sind 31 Verbindungselemente 4 vorgesehen. Diese hohe Anzahl an Verbindungselementen 4 ermöglicht die oben beschriebene stark verringerte Dimensionierung der Verbindungselemente 4 im Hinblick auf deren Durchmesser und deren Länge.

Die Figuren 8 und 9 zeigen eine weitere Ausführungsform der Bremsscheibe 1, die ebenfalls den Bremsscheibentopf 2, den Reibring 3 und die Verbindungselemente 4 zur Verbindung des Bremsscheibentopfs 2 mit dem Reibring 3 aufweist.

Im Gegensatz zu der in den Figuren 1 - 7 dargestellten Ausführungsform sind die Verbindungselemente 4 jedoch konisch ausgebildet und weisen einen in Fig. 9 mit "C" bezeichneten Konuswinkel von 1,6° - 3,6°, vorzugsweise 1,6° - 2,6°, auf. Dabei befindet sich der kleinere Durchmesser der Verbindungselemente 4 innerhalb des Reibrings 3, d.h. der Durchmesser der Verbindungselemente 4 verringert sich in Richtung von dem Bremsscheibentopf 2 zu dem Reibring 3 hin, sodass eine erwärmungsbedingte Ausdehnung des Reibrings 3 ermöglicht wird.

Durch die Konizität der Verbindungselemente 4 wird außerdem verhindert, dass diese bei einer Ausdehnung des Reibrings 3 aus dem Bremsscheibentopf 2 gezogen werden, da sich der Reibring 3 von den Verbindungselementen 4 lösen kann. Die Verbindungselemente 4 sind dabei vorzugsweise über ihre gesamte Länge konisch.

Der Durchmesser und die Länge der Verbindungselemente 4 kann den oben bezüglich der Verbindungselemente 4 der Bremsscheibe 1 gemäß der Figuren 1 - 7 beschriebenen Werten entsprechen. Auch die Bohrungen 10 des Reibrings 3 der Bremsscheibe 1 gemäß den Figuren 8 und 9 können als Sacklochbohrungen ausgeführt sein. Im Falle der konischen Verbindungselemente 4 kann deren Montage in die als Sackloch ausgeführte Bohrungen 10 auf sehr einfache Weise erfolgen, da die sich in den Bohrungen 10 befindende Luft dann problemlos entweichen kann.

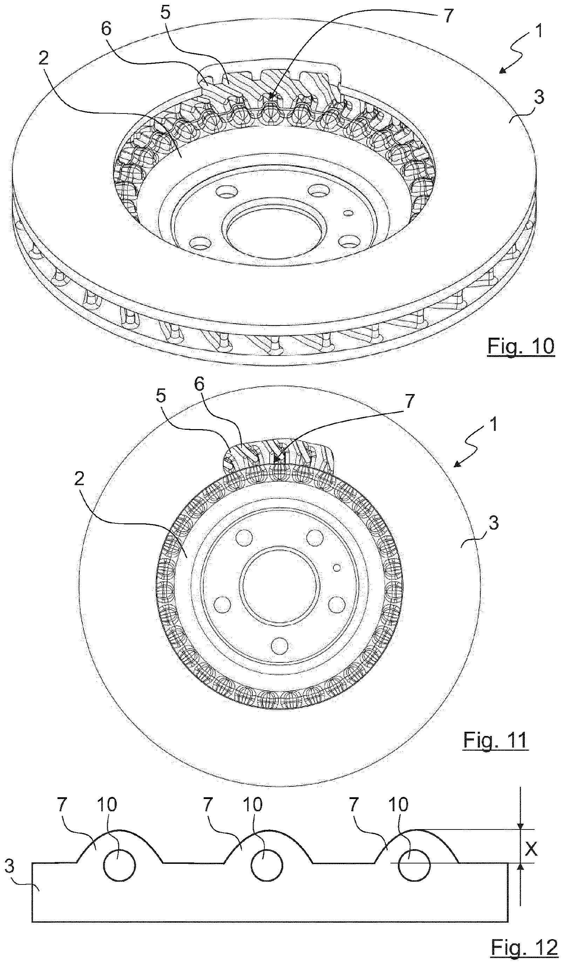

Die Figuren 10 und 11 zeigen weitere Darstellungen der Bremsscheibe 1, aus denen die Konfiguration derselben insbesondere in den Aufnahmebereichen 7 für die Verbindungselemente 4 deutlicher hervorgehen.

In Fig. 12 ist auf sehr schematische Weise ein Teilstück einer Abwicklung des Innendurchmessers des Reibrings einer erfindungsgemäßen Bremsscheibe mit den Aufnahmebereichen 7 des Reibrings 3 für die Verbindungselemente 4 dargestellt. Dabei ist eine axiale Ausdehnung desjenigen Teils der Aufnahmebereiche 7 des Reibrings 3, der von der Kühlkanalfläche 3a2 der Reibringscheibe 3a in Richtung des Kühlkanals 5 verläuft, mit "X" bezeichnet. Als der für diese axiale Ausdehnung "X" relevante Teil des Aufnahmebereichs 7 wird also derjenige Bereich des Reibrings 3 definiert, der an der Kühlkanalfläche 3a2 der Reibringscheibe 3a, in der sich die Bohrung 10 zur Aufnahme des Verbindungselements 4 befindet, beginnt und an dem die Reibringscheibe 3a endet bzw. an der der Verbindungssteg 6 beginnt. Diese axiale Ausdehnung X beträgt im vorliegenden Fall4 - 7,5 mm, vorzugsweise 5,5 mm. Auch in den Figuren 2 und 9 ist die axiale Ausdehnung X der Aufnahmebereiche 7 des Reibrings 3, ausgehend von der Kühlkanalfläche 3a2 der Reibringscheibe 3a in Richtung des Kühlkanals 5, kenntlich gemacht. Diese axiale Ausdehnung X der Aufnahmebereiche 7 ist vergleichsweise gering, wodurch eine vergrößerte Öffnung in den Kühlkanal 5 entsteht und mehr Kühlluft in denselben einströmen kann.

Sämtliche hierin beschriebenen Ausführungsformen der Bremsscheibe 1 können im Prinzip beliebig miteinander kombiniert werden, sofern nicht offensichtliche Gründe einer bestimmten Kombination entgegenstehen. Insbesondere ist es möglich, eines oder mehrerer der Merkmale, wonach 21 - 42, vorzugsweise 27 - 32, Verbindungselemente 4 zur Verbindung des Bremsscheibentopfs 2 mit dem Reibring 3 vorgesehen sind, wonach die Verbindungselemente 4 einen Durchmesser von 3 - 6,5 mm, vorzugsweise 4 - 5,5 mm, noch bevorzugter 5 mm, aufweisen, wonach die Verbindungselemente 4 jeweils eine Länge von 20 - 30 mm, vorzugsweise 22 - 26 mm, aufweisen und/oder wonach die Verbindungselemente 4 konisch ausgebildet sind und einen Konuswinkel von 0,6° - 3,6°, vorzugsweise 1,6° - 2,6°, aufweisen in einer einzigen Bremsscheibe 1 zu verwirklichen. vorzugsweise 4 - 7,5 mm, noch bevorzugter 5,5 mm. Auch in des Figuren 2 und 9 ist die axiale Ausdehnung X der Aufnahmebereiche 7 des Reibrings 3, ausgehend von der Kühlkanalfläche 3a2 der Reibringscheibe 3a in Richtung des Kühlkanals 5, kenntlich gemacht. Diese axiale Ausdehnung X der Aufnahmebereiche 7 ist vergleichsweise gering, wodurch eine vergrößerte Öffnung in den Kühlkanal 5 entsteht und mehr Kühlluft in denselben einströmen kann.

Sämtliche hierin beschriebenen Ausführungsformen der Bremsscheibe 1 können im Prinzip beliebig miteinander kombiniert werden, sofern nicht offensichtliche Gründe einer bestimmten Kombination entgegenstehen. Insbesondere ist es möglich, eines oder mehrerer der Merkmale, wonach 21 - 42, vorzugsweise 27 - 32, Verbindungselemente 4 zur Verbindung des Bremsscheibentopfs 2 mit dem Reibring 3 vorgesehen sind, wonach die Verbindungselemente 4 einen Durchmesser von 3 - 6,5 mm, vorzugsweise 4 - 5,5 mm, noch bevorzugter 5 mm, aufweisen, wonach die Verbindungselemente 4 jeweils eine Länge von 20 - 30 mm, vorzugsweise 22 - 26 mm, aufweisen und/oder wonach die Verbindungselemente 4 konisch ausgebildet sind und einen Konuswinkel von 0,6° - 3,6°, vorzugsweise 1,6° - 2,6°, aufweisen in einer einzigen Bremsscheibe 1 zu verwirklichen.

## Patentansprüche

1. Bremsscheibe (1) mit einem Bremsscheibentopf (2), mit einem zwei Reibringscheiben (3a,3b) aufweisenden Reibring (3) und mit mehreren stiftförmigen Verbindungselementen (4) zur Verbindung des Bremsscheibentopfs (2) mit dem Reibring (3), wobei zwischen den Reibringscheiben (3a,3b) ein Kühlkanal (5) gebildet ist, wobei die Reibringscheiben (3a,3b) an ihren äußeren Planflächen jeweilige Reibflächen (3a1,3b1) und an ihren inneren Planflächen jeweilige Kühlkanalflächen (3a2,3b2) aufweisen, wobei der Reibring (3) mehrere Aufnahmebereiche (7) zur Aufnahme der stiftförmigen Verbindungselemente (4) aufweist, wobei der Bremsscheibentopf (2) in einem separaten Schritt mittels Gießen an die Verbindungselemente (4) angegossen ist, und wobei eine Breite (A) eines zwischen dem Bremsscheibentopf (2) und dem Reibring (3) vorhandenen Spalts (8) sich dadurch ergibt, dass beim Gießen des Bremsscheibentopfs (2) zumindest ein in Umfangsrichtung in sich geschlossener Abschnitt (3d) einer Mantelfläche (3c) des Innendurchmessers des Reibrings (3) als Teil einer Gießform (9) eingesetzt wird,
**dadurch gekennzeichnet, dass**
der Spalt (8) eine Breite (A) von 0,1 - 1,5 mm aufweist, dass eine axiale Ausdehnung (X) desjenigen Teils der Aufnahmebereiche (7) des Reibrings (3)
der sich von der Kühlkanalfläche (3a2) in Richtung des Kühlkanals (5) erstreckt 4 - 7,5 mm, vorzugsweise 5,5 mm, beträgt, und dass die Verbindungselemente (4) im Wesentlichen zylindrisch ohne nach außen abstehende Absätze, oder konisch mit einem Konuswinkel von 0,6° - 3,6°, vorzugsweise 1,6° - 2,6°, ausgebildet sind und dass die Verbindungselemente (4) einen Durchmesser von 3 - 6,5 mm aufweisen.

2. Bremsscheibe nach Anspruch 1,
**dadurchgekennzeichnet,** dass der Spalt (8) eine Breite (A) von 0,57 - 1,0 mm, vorzugsweise 0,7 mm, aufweist.

3. Bremsscheibe nach Anspruch 1 oder 2,
**dadurch gekennzeichnet, dass**
21 - 42, vorzugsweise 27 - 32, Verbindungselemente (4) zur Verbindung des Bremsscheibentopfs (2) mit dem Reibring (3) vorgesehen sind.

4. Bremsscheibe nach Anspruch einem der Ansprüche 1 bis 3,
**dadurch gekennzeichnet, dass**
die Verbindungselemente (4) einen Durchmesser von 4 - 5,5 mm, vorzugsweise 5 mm, aufweisen.

5. Bremsscheibe nach Anspruch einem der Ansprüche 1 bis 4,
**dadurch gekennzeichnet, dass**
die Verbindungselemente (4) jeweils eine Länge von 20 - 30 mm, vorzugsweise 22 - 26 mm aufweisen.

## Claims

1. Brake disk (1) having a brake disk chamber (2), a friction ring (3) having two friction ring disks (3a,3b) and a plurality of pin-shaped connecting elements (4) for connecting the brake disk chamber (2) and the friction ring (3), a cooling duct (5) being formed between the fiction ring disks (3a,3b), the friction ring disks (3a,3b) having respective friction surfaces (3a1,3b1) on their outer planar surfaces and respective cooling channel surfaces (3a2,3b2) on their inner planar surfaces, the friction ring (3) having a plurality of receiving regions (7) for receiving the pin-shaped connecting elements (4), the brake disk chamber (2) being cast to the connecting elements (4) in a separate step by means of casting, a width (A) of a gap (8) existing between the brake disk chamber (2) and the friction ring (3) resulting from the fact that, during casting of the brake disk chamber (2), at least one section (3d) of a lateral surface (3c) of the inner diameter of the friction ring (3) which is closed in itself in the circumferential direction is used as part of a casting mold (9),
**characterized in that**
the gap (8) has a width (A) of 0.1 - 1.5 mm, that an axial extension (X) of that part of the receiving region (7) of the friction ring (3) which extends from the cooling channel surface (3a2) in the direction of the cooling channel (5) is 4 - 7.5 mm, preferably 5.5 mm, and that the connecting elements (4) are essentially cylindrical, without outwardly protruding shoulders, or are conical and have a cone angle of 0.6° - 3.6°, preferably 1.6° - 2.6°, and that the connecting elements (4) have a diameter of 3 - 6.5 mm.

2. Brake disk according to claim 1,
**characterized in that**
the gap (8) has a width (A) of 0.57 - 1.0 mm, preferably 0.7 mm.

3. Brake disk according to claim 1 or 2,
1 **characterized in that**
21 - 42, preferably 27 - 32, connecting elements (4) are provided to connect the brake disk chamber (2) and the friction ring (3).

4. Brake disk according to any one of claims 1 to 3,
**characterized in that**
the connecting elements (4) have a diameter of 4 - 5.5 mm, preferably 5 mm.

5. Brake disk according to any one of claims 1 to 4,
**characterized in that**
the connecting elements (4) each have a length of 20 - 30 mm, preferably 22 - 26 mm.

## Revendications

1. Disque de frein (1) comprenant un bol de disque de frein (2), une bague de friction (3) qui présente deux disques de bague de friction (3a, 3b) et plusieurs éléments de liaison (4) en forme de tige pour la liaison du bol de disque de frein (2) à la bague de friction (3), dans lequel un canal de refroidissement (5) est formé entre les disques de bague de friction (3a, 3b), dans lequel les disques de bague de friction (3a, 3b) présentent sur leurs surfaces planes extérieures des surfaces de friction (3a1, 3b1) respectives et sur leurs surfaces planes intérieures des surfaces de canal de refroidissement (3a2, 3b2) respectives, dans lequel la bague de friction (3) présente plusieurs zones de réception (7) pour la réception des éléments de liaison (4) en forme de tige, dans lequel le bol de disque de frein (2) est coulé sur les éléments de liaison (4) par coulée dans une étape séparée et dans lequel une largeur (A) d'une fente (8) présente entre le bol de disque de frein (2) et la bague de friction (3) résulte du fait que, lors de la coulée du bol de disque de frein (2), au moins une partie (3d) fermée sur elle-même dans la direction périphérique d'une surface d'enveloppe (3c) du diamètre intérieur de la bague de friction (3) est utilisée comme partie d'un moule de coulée (9),
**caractérisé en ce que** la fente (8) présente une largeur (A) qui est comprise entre 0,1 mm à 1,5 mm, **en ce qu'**une étendue axiale (X) de la partie des zones de réception (7) de la bague de friction (3) qui s'étend de la surface de canal de refroidissement (3a2) en direction du canal de refroidissement (5) atteint de 4 mm à 7,5 mm, de préférence 5,5 mm, **en ce que** les éléments de liaison (4) sont réalisés de manière sensiblement cylindrique sans talons faisant saillie de l'extérieur, ou de manière conique avec un angle du cône qui est compris entre 0,6° à 3,6°, de préférence entre 1,6° à 2,6°, et **en ce que** les éléments de liaison (4) présentent un diamètre qui est compris entre 3 mm à 6,5 mm.

2. Disque de frein selon la revendication 1, **caractérisé en ce que** la fente (8) présente une largeur (A) qui est comprise entre 0,57 mm à 1,0 mm, et qui est de préférence égale à 0,7 mm.

3. Disque de frein selon la revendication 1 ou 2, **caractérisé en ce que** de 21 à 42, et de préférence 27 à 32, éléments de liaison (4) sont prévus pour la liaison du bol de disque de frein (2) à la bague de friction (3).

4. Disque de frein selon l'une quelconque des revendications 1 à 3, **caractérisé en ce que** les éléments de liaison (4) présentent un diamètre qui est compris entre 4 mm à 5,5 mm, et qui est de préférence égal à 5 mm.

5. Disque de frein selon l'une quelconque des revendications 1 à 4, **caractérisé en ce que** les éléments de liaison (4) présentent respectivement une longueur qui est comprise entre 20 mm à 30 mm, et de préférence entre 22 mm à 26 mm.
